# EUROPEAN PATENT SPECIFICATION

(11) **EP 1 482 021 B1**
(45) Date of publication and mention of the grant of the patent: **24.01.2007**
(21) Application number: 04012212.9
(22) Date of filing: 24.05.2004
(51) Int. Cl.: C09K 19/34

(54) **Pyrans as liquid crystals**
Pyrane als Flüssigkristalle
Pyranes comme cristaux-liquides

(30) Priority: 27.05.2003 EP 03011906
(43) Date of publication of application: 01.12.2004
(73) Proprietor: Merck Patent GmbH, 64293 Darmstadt (DE)
(72) Inventor: Goulding, Mark John, Dr., Hampshire BH24 1SH (GB); Duffy, Warren, Dr., Hampshire SO15 5EF Southampton (GB); Adlem, Kevin, Bournemouth BH8 9LS (GB); Kirsch, Peer, 64342 Seeheim-Jugenheim (DE); Hahn, Alexander, 64521 Gross-Gerau (DE); Poetsch, Eike, Dr., 64367 Mühltal (DE); Binder, Werner, 64807 Dieburg (DE); Meyer, Volker, 64846 Gross-Zimmern (DE); Klasen-Memmer, Melanie, Dr., 67259 Heuchelheim (DE); Heckmeier, Michael, Dr, 69502 Hemsbach (DE); Lüssem, Georg, Dr., 85238 Petershausen (DE)

(56) References cited:
- EP-A- 0 511 487
- EP-A- 1 431 369
- DE-A- 4 132 006
- DE-A- 10 008 712
- DE-A- 10 133 867
- US-A- 5 344 587

## Description

The invention relates to a process for preparing tetrahydropyran derivatives of the formula I as detailed below and in claim 1.

In recent years, applicable fields of liquid crystals such as various kinds of display devices, electronic optical devices, liquid crystal sensors, etc. have markedly been enlarged, and accompanying this situation, liquid crystal compounds having various structures have been proposed. In liquid crystal materials particularly used for display devices, nematic liquid crystals are at present in mainstream, and a TN-type or a STN-type simple matrix system using the same and a TFT-type active matrix system in which a thin film transistor is provided to respective picture elements have been used.

It is known in the art to use tetrahydropyran derivatives as liquid crystal compounds.

EP-A 1431369 discloses tetrahydropyran compounds with two or three rings altogether, but no process for preparing them. Tetrahydropyran compounds are disclosed less explicitly in the documents DE-A 10008712 and DE-A 10133867 as part of compounds bearing a -OCF₃ and -CN end group respectively. The compounds are useful for liquid crystal compositions. No preparation is disclosed.

DE-A 41 320 06 discloses heterocyclic compounds comprising a tetrahydropyrane ring or a dioxane ring. The compounds show according to the specification of DE-A 41 320 06 a good solubility for other components of liquid crystalline compositions, a high positive dielectric anisotropy and an advantageous viscosity. However, the property profile, especially the rotational viscosity, dielectric anisotropy and holding ratio of the compounds mentioned in DE-A 41 320 06 may be optimized.

US 5,344,587 dicloses an electro-optical liquid crystal system, which contains one or more compounds of the formula 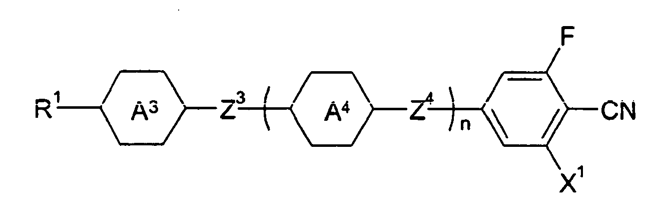 in which R¹ is for example alkyl, Z³ and Z⁴ are for example a single bond or -CH₂CH₂-, A³ and A⁴ are for example trans-1,4-cyclohexylene or 1,4-phenylene. Tetrahydropyran derivatives comprising an aromatic endgroup of formula A as mentioned above are not disclosed.

EP-A 0 511 487 discloses an electro-optical liquid crystal system which contains a dielectrically positive liquid crystal mixture which contains one or more compounds comprising an aromatic endgroup of formula A. Compounds comprising an aromatic endgroup of formula A and a tetrahydropyran ring are not disclosed in EP-A 0 511 487.

It is an object of the present invention to provide new tetrahydropyran derivatives which are suitable as components in liquid crystalline compositions, especially in nematic media having a positive dielectric anisotropy. It is a further object of the present invention to provide compounds having a balanced property profile of the following properties: rotational viscositiy, dielectric anisotropy and holding ratio. It is further an object of the present invention to provide compounds having a good solubility for other components of liquid crystal compositions and a high positive dielectric anisotropy.

These objects can be achieved by providing a process for preparing tetrahydropyran derivatives of formula I, which is detailed below and in claim 1, 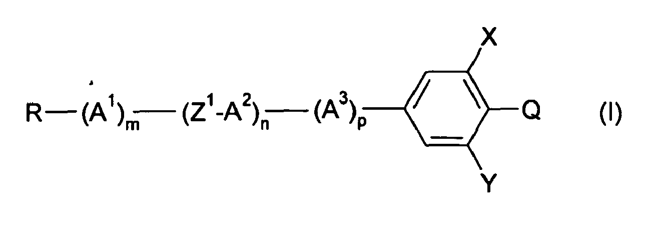 in which
R is H, an alkyl group, which is unsubstituted or substituted by at least one halogen atom or -CN, having from 1 to 12 C atoms, it is also being possible for one or more non adjacent CH₂-groups to be independently replaced by -O-, -S-, -CO-, -CF₂-, 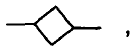 , CO-O-, -O-CO-, or -CH=CH-, preferably unsubstitued alkyl group having from 1 to 12, preferably from 1 to 5, C atoms,
A¹, A², A³ are each independently
   a) trans-1,4-cyclohexylene
   b) tetrahydropyran-2,5-diyl,
   c) 1,4-phenylene, it is also being possible for one or more non adjacent CH-groups to be replaced by N,
   d) 1,4-bicyclo[2.2.2]octylene, piperidine-2,5-diyl,
   e) naphthalene-2,6-diyl,
   f) decahydronaphthalene-2,6-diyl,
   g) 1,2,3,4-tetrahydronaphthalene-2,6-diyl,
   h) 1,4-cyclohexenylene,
   it is also being possible for the groups listed under c), e) and g) to be substituted with -CN, -Cl, -F or OCF₃,
   preferably A¹, A², A³ are each independently
   a) trans-1,4-cyclohexylene,
   b) tetrahydropyran-2,5-diyl,
   c) 1,4-phenylene, it is also being possible for one or more non adjacent CH-groups to be replaced by N,
   it is also being possible for the groups listed under c) to be substituted with -CN, -Cl, -F, or -OCF₃, preferably -F, or -OCF₃, more preferably -F, with the proviso that one of the groups A¹, A², or A³ is tetrahydropyran-2,5-diyl,
Z is -CO-O-, -CH₂O-, -O-, -O-CH₂-, -CH₂CH₂-, -CH=CH-, -C≡C-, or a single bond, preferably -CO-O-, or a single bond,
m is 0, 1, or 2, preferably m is 0 or 1,
n and p each is independently 0, 1 or 2, preferably n and p each are 0 or 1,
but (m+n+p) is at least 2 and at most 4, preferably (m+n+p) is 2,
X, Y each is -H or -F, with the proviso that at least one of X and Y is -F,
Q is H, -CN, -NCS, -F, -Cl, -CF₃, -OCF₃,-OCHF₂, SF₅, -OCF₂CHFCF₃, - OCHFCF₃, or -OCF₂CF₃, preferably -F or -OCF₃.

The compounds of formula I are useful as components in liquid crystalline compositions. It is especially possible to provide liquid crystalline compositions having large nematic areas, excellent chemical stability and excellent elastic features, a low temperature dependence of the threshold voltage, and/or low optical anisotropy. The compounds of formula I further show a high positive dielectric anisotropy and an advantageous value of viscosity as well as a large ε⊥ at positive dielectric anisotropy and a low temperature dependence of the threshold voltage. It was found, that the combination of a tetrahydropyran group together with an endgroup of formula A 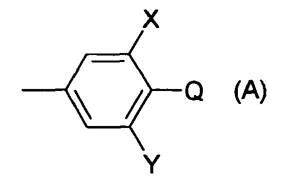 wherein
X, Y each is -H or -F, with the proviso that at least one of X and Y is -F,
Q is H, -CN, -NCS, -F, -Cl, -CF₃, -OCF₃, SF₅, -OCHF₂, -OCF₂CHFCF₃, -OCHFCF₃, or -OCF₂CF₃, preferably -F or -OCF₃,
and at least three cyclic rings as realised in the tetrahydropyran derivatives of formula I results in compounds having balanced properties, especially a high dielectric anisotropy, a good hydrolytic stability, a good rotational viscosity and a good holding ratio.

The alkyl group R of the compounds of formula I may be linear or branched, preferably the alkyl groups are linear. More preferably R is a linear alkyl group of the general formula CₙH₂ₙ₊₁, wherein n is 1 to 10, preferably 1 to 7, more preferably R is methyl, ethyl, n-propyl, n-butyl, n-pentyl, n-hexyl, or n-heptyl.

However, it is also possible that R is a branched alkyl group, because of the better solubility of compounds of the formula I with branched alkyl groups in the generally used liquid crystalline basic materials, or especially as chiral dopants, when the compounds of the formula I having branched alkyl groups are optically active. Those branched alkyl groups contain usually not more than one branch. Preferred branched alkyl groups are isopropyl, 2-butyl (=1-methylpropyl), isobutyl (=2-methylpropyl), 2-methylbutyl, isopentyl (=3-methylbutyl), 2-methylpentyl, or 3-methylpentyl.

Also included are besides the racemates of the tetrahydropyran derivatives their enantiomers - as the tetrahydropyran ring contains two chiral centers - and their resulting diastereomers derived from branched side chains represented by R.

In a preferred embodiment of the present invention tetrahydropyran derivatives are provided, wherein in the endgroup of the formula A 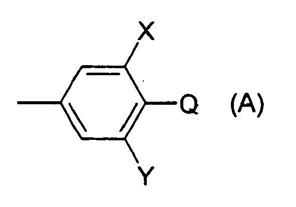 of the tetrahydropyran derivatives of formula I
X, Y, and Q are -F.

In a further preferred embodiment one of X and Y in the endgroup of formula A is -F and the other one is -H, and Q is -OCF₃.

At least one of A¹, A² and A³ is preferably trans-1,4-cyclohexylene, tetrahydropyran-2,5-diyl, or one or two of A¹, A² and A³ may be 1,4-phenylene, it is also being possible for one or more non adjacent CH-groups to be replaced by N, or CF, more preferably at least one of A² and A³ is trans-1,4-cyclohexylene or 1,4-phenylene,
with the proviso that one of the groups A¹, A², or A³ is tetrahydropyran-2,5-diyl. More preferably m is 0 and one of the groups A², or A³ is tetrahydropyran-2,5-diyl.

In a further embodiment tetrahydropyran derivatives of formula (IA) are therefore provided 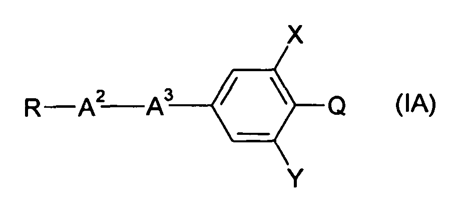 in which
R is H, an alkyl group, which is unsubstituted or substituted by at least one halogen atom or -CN, having from 1 to 12 C atoms, it is also being possible for one or more non adjacent CH₂-groups to be independently replaced by -O-, -S-, -CO-, -CF₂-, 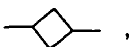 , CO-O-, -O-CO-, or -CH=CH-,
A², A³ are each independently
   a) trans-1,4-cyclohexylene,
   b) tetrahydropyran-2,5-diyl,
   c) 1,4-phenylene, it is also being possible for one or more non adjacent CH-groups to be replaced by N, or CF, preferably 1,4-phenylene,
X, Y each is -H or -F, with the proviso that at least one of X and Y is -F,
Q is H, -CN, -NCS, -F, -Cl, -CF₃, -OCF₃, -OCHF₂, SF₅, -OCF₂CHFCF₃, -OCHFCF₃, or -OCF₂CF₃, preferably -F or -OCF₃,
with the proviso that one of the groups A², or A³ is tetrahydropyran-2,5-diyl.

The compounds of formula I might be prepared by methods known in the art, as disclosed in literature, for example in Houben-Weyl, Methoden der organischen Chemie, Georg-Thieme-Verlag, Stuttgart, under reaction conditions which are known and useful for said reactions.

According to the invention the compounds of formula I are prepared by coupling of two suitable fragments: 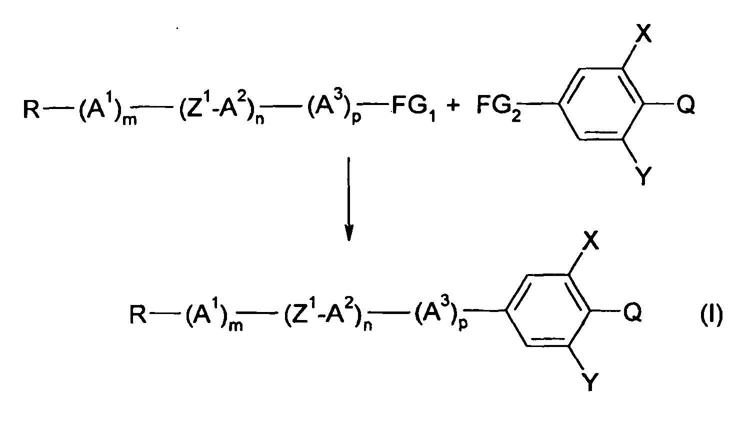 wherein FG₁ and FG₂ are functional groups selected from:

| **-FG₁** | **-FG₂** |
|---|---|
| =O | -met = Li, MgBr, ZnBr, or 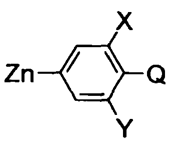 |
| -Br | -met = Li, MgBr, ZnBr, or Zn |
| -met = Li, MgBr, ZnBr, or Zn | -Br |

with the proviso if Q in formula I is -CN, -NCS -met must be a Zn derivative.

The two fragments are prepared by methods known in the art.

The starting materials used for the preparation of compounds of the formula I can be isolated or used in situ, which means that the starting materials are not isolated from the reaction mixture, but directly reacted to the compounds of formula I.

The compounds of formula I can for example be prepared according to the following schemes 1, 2, 3, and 4. 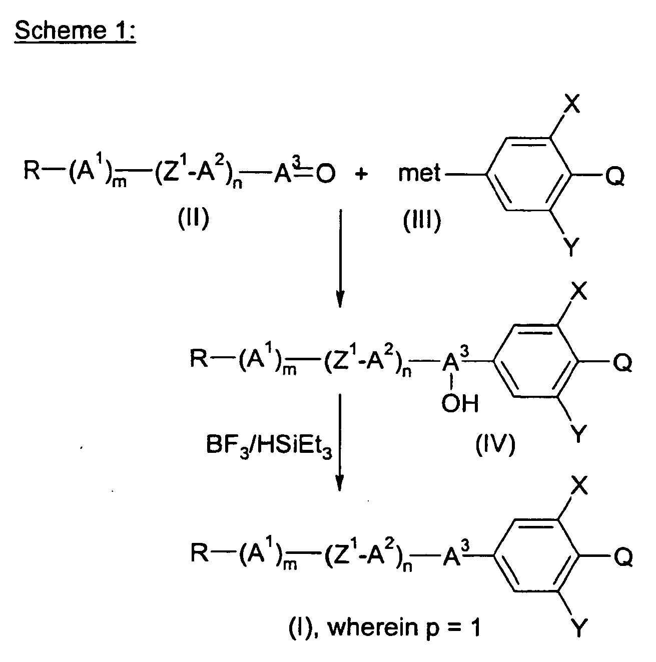 in Formula IIa:A³=O is 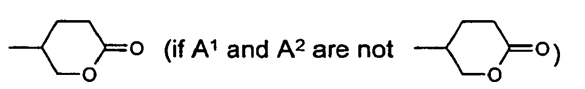 in Formula IIb: A³=O is 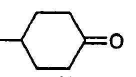 met is Li, MgBr, ZnBr, 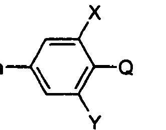 if Q is -CN, -NCS met must be a Zn-derivative
or otherwise -CN or -NCS has to be introduced later
e.g.for-CN:Q=H → Q=Li → Q=I → Q = CN
e.g. for -NCS: Q = N( 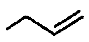 )₂ → Q = NH₂ → Q = NCS 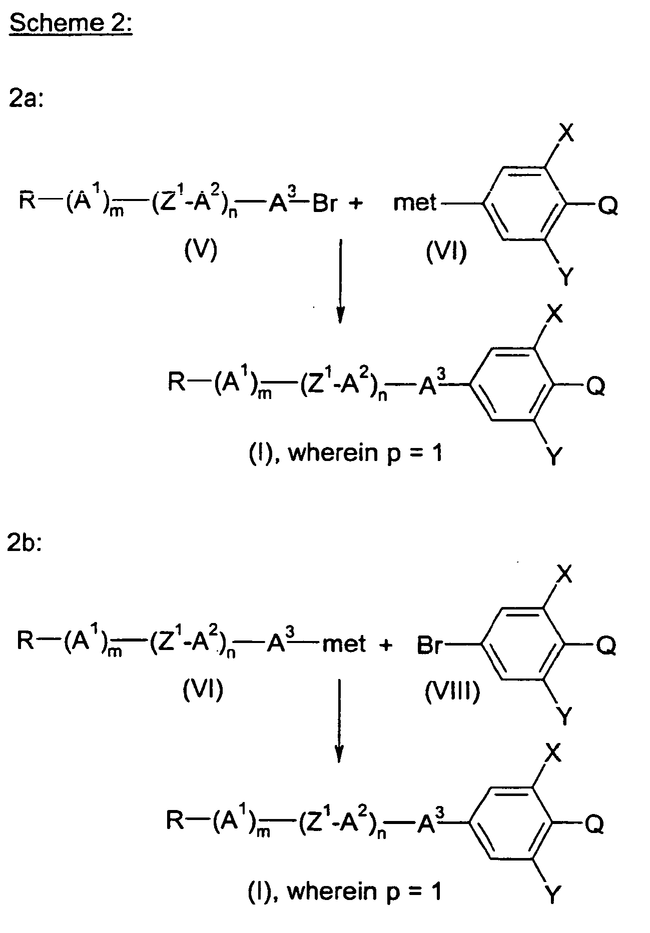 In schemes 2a and 2b Q is defined as in scheme 1;
met in formulae VI and VII is defined as for formula III (in scheme 1) and is furthermore -B(OH)₂.

The precursor materials IIa are prepared according to scheme 3.

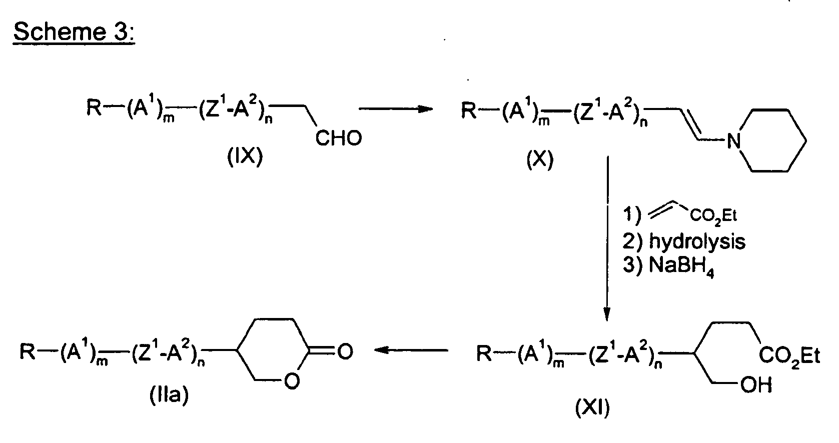

The precursor materials II, III, VI, and IX are accessable by general methods as described in handbooks like Houben-Weyl, Organic Reactions (Volume 1 - 55, John Wiley & Sons, Organic Synthesis (Collective Volume I - VI, Vol 39 - 75, John Wiley & Sons)), W. Theilheimer, Volume 1 - 50, Synthetic Methods (Karger Verlag - Basel). The bromides of formula VIII are commercially available.

The intermediates of formula II containing either in A¹ or A² the tetrahydropyran-2,5-diyl ring are prepared very similarly to scheme 3 as shown in scheme 4 (for A² = tetrahydropyran-2,5-diyl).

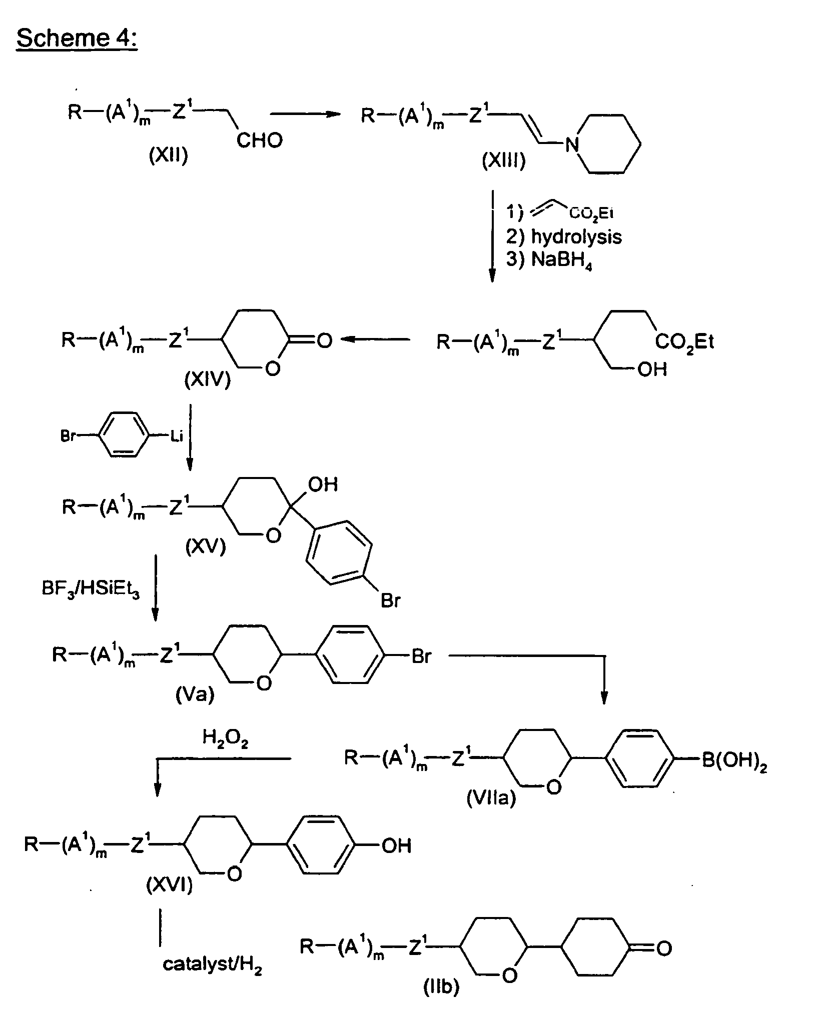

In case A¹ is tetrahydropyran-2,5-diyl the synthesis of the corresponding precursor is performed similarly to scheme 4 for the ring A¹ and the other compound-elements which are modified accordingly.

An example for a general approach to the intermediates of formulae V and VII is also shown in scheme 4 by the representatives of formula Va and Vlla. The conversion of compounds V to VII and Viii to VI is possible by well known procedures. The cross couplings according to scheme 2 are performed for example under the Suzuki or Kumada/Negishi cross-coupling conditions by Pd- or Ni-catalysis (cat.).

The tetrahydropyran derivatives of formula I are useful as components in liquid crystal compositions.

The compounds of the present invention are especially useful in nematic liquid crystal compositions, especially in nematic liquid crystal compositions having a positive dielectric anisotropy. By using the tetrahydropyran derivatives of formula I as components in liquid crystal compositions liquid crystal compositions having a broad nematic area, excellent chemical stability, excellent elastic properties, large ε_{⊥} at a positive dielectric anisotropy, low temperature dependence of the threshold voltage and/or low optical anisotropy are provided. Further, the tetrahydropyran derivatives show a good solubility for other components of liquid crystal compositions, and a balanced property profile of the following parameters: rotational viscosity, dielectric anisotropy and holding ratio.

Further a liquid crystal composition is disclosed comprising at least two components including at least one tetrahydropyran derivative of formula I.

The liquid crystal compositions of the present invention preferably contain at least one tetrahydropyran derivative of formula I of the present invention and in general 2 to 40, preferably 4 to 30, more preferably 7 to 25 further components. These further components are preferably selected from nematic or nematogenic (monotropic or isotropic) compounds, especially compounds of the classes of biphenyl, terphenyl, phenylbenzoate or cyclohexylbenzoate, cyclohexane carboxylic acid phenyl ester or cyclohexane carboxylic acid cyclohexyl ester, phenyl ester or cyclo hexyl ester of cyclohexyl benzoic acid, phenyl ester or cyclohexyl ester of cyclohexyl cyclohexane carboxylic acid, cyclohexyl phenyl ester of benzoic acid, cyclohexyl phenyl ester of cyclohexane carboxylic acid, cyclohexyl phenyl ester of cyclohexyl cyclohexane carboxylic acid, phenylcyclohexane, cyclohexylbiphenyl, phenylcyclohexyl cyclohexane, cyclohexyl cyclohexane, cyclohexyl cyclo hexene, cyclohexyl cyclohexyl cyclohexene, 1,4-bis-cyclohexylbenzene, 4,4-bis-cyclohexylbiphenyl, phenylpyrimidine, cyclohexylpyrimidine, phenyl-pyridine, cyclohexyl-pyridine, phenyldioxane, cyclohexyldioxane, phenyl-1,3-dithiane, cyclohexyl-1,3-ditiane, 1,2-diphenylethane, 1,2-dicyclohexylethylene, 1-phenyl-2-cyclhexylethane, 1-cyclohexyl-2-(4-phenylcyclohexyl)-ethane, 1-cyclohexyl-2-biphenylylethane, 1-phenyl-2-cyclohexylphenylethane and tolane. The 1,4-phenylene groups of said compounds may be fluorinated.

Instead of the ester-carboxylic linkage (-CO-O-) between a cyclohexyl ring or phenyl ring and a phenyl ring in the ester derivatives mentioned above linkages with the structure -CF₂O-, -CH=CH-, -C≡C-, -CF=CF-, or -CF₂-CF₂- may be incorporated.

The most preferred further components of the liquid crystal compositions are characterized by the formulae A, B, C, D, E, and F:

R'-L-E-R" (A)

R'-L-CF₂O-E-R" (B)

R'-L-COO-E-R" (C)

R'-L-CH₂CH₂-E-R" (D)

R'-L-CH=CH-E-R" (E)

R'-L-C≡C-E-R" (F)

wherein
L, E are each independently selected from the group consisting of -Phe-, -Cyc-, -Phe-Phe-, -Cyc-Phe-, -Cyc-Cyc-, -Pyr-, -Dio-, -G-Phe-, and -G-Cyc-; as well as the mirror images of the groups mentioned before,
wherein Phe is unsubstitued 1,4-phenylene or substituted 1,4-phenylene, which is substituted by -F, Cyc is trans-1,4-cyclohexylene or 1,4-cyclohexenylene, Pyr is pyrimidine-2,5-diyl or pyridine-2,5-diyl, Dio is 1,3-dioxane-2,5-diyl, and G is 2-(trans-1,4-cyclohexyl)-ethyl, pyrimidine-2,5-diyl, pyridine-2,5-diyl, or 1,3-dioxane-2,5-diyl;
preferably at least one of the groups L and E is Cyc, Phe, or Pyr; more preferably E is Cyc, Phe or Phe-Cyc.

The liquid crystal compositions preferably contain one or more components selected from the group consisting of formulae A, B, C, D, E, and F, wherein L and E are selected from the group consisting of Cyc, Phe, and Pyr and at the same time one or more components selected from compounds of formulae A, B, C, D, and E, wherein one of the groups L and E is selected from the group consisting of Cyc, Phe, and Pyr, and the other group is selected from the group consisting of -Phe-Phe, -Cyc-Phe-, -Cyc-Cyc-, -G-Phe-, and -G-Cyc, and optionally one or more components selected from the group consisting of the compounds of formulae A, B, C, D, E, and F, wherein the groups L and E are selected from the group consisting of -Cyc-Phe-, -Cyc-Cyc-, -G-Phe-, and -G-Cyc.

R' and R" each are independently of each other alkyl, alkenyl, alkoxy, alkenyloxy or alkanoyloxy having from 1 to 8 carbon atoms, preferably R' and R" are different and at least one of R' and R" is alkyl or alkenyl (group 1).

In a further embodiment R' is alkyl, alkenyl, alkoxy, alkenyloxy, or alkanoyloxy having from 1 to 8 carbon atoms, preferably alkyl or alkenyl, and R" is -CN, -CF₃, -OCF₃, -F, Cl, or NCS, preferably -F, -Cl, -CF₃, or -OCF₃ (group 2).

In general further combinations of the substituents mentioned in the compounds of formulae A, B, C, D, E, and F are possible. Many of the compounds mentioned above or mixtures of said compounds are buyable. All compounds mentioned above are preparable by methods known in the art or analogeous methods which are known by a person skilled in the art.

The liquid crystal compositions preferably comprise components of group 1 of the compounds as mentioned above as well as components of group 2 of the compounds as mentioned above. More preferably, the liquid crystal compositions comprise 20 to 90 % by weight, preferably 30 to 90 % by weight of compounds of group 1 and 10 to 80 % by weight, preferably 10 to 50 % by weight of compounds of group 2, and at least one tetrahydropyran derivative of formula I of the present invention, wherein the sum of the parts of compounds of group 1, compounds of group 2 and tetrahydropyran derivatives of formula I of the present invention is 100 % by weight.

Preferably the liquid crystal compositions comprise 1 to 40 % by weight, more preferably 5 to 30 % by weight of the tetrahydropyran derivatives of formula I.

The liquid crystal compositions preferably comprise more than 40 % by weight, 45 to 90 % by weight of the tetrahydropyran derivatives of formula I of the present invention.

The liquid crystal compositions preferably comprise three, four, or five different tetrahydropyran derivatives of formula I.

The liquid crystal compositions are prepared in a manner known per se. In general, the components are solved in each other, preferably at elevated temperature.

As a rule, the desired amount of the components used in the smaller amount is dissolved in the components making up the main component, expediently at elevated temperature. It is also possible to mix solutions of the components in an organic solvent, for example in acetone, chloroform or methanol, and to remove the solvent again after thorough mixing, for example by distillation.

The liquid crystalline phases obtained with the liquid crystal compositions may be modified so that they are suitable for use in all liquid crystal display devices known in the art.

Suitable additives are known by a person skilled in the art and are described in literature (see for example H. Kelker/R. Hatz, Handbook of Liquid Crystals, Verlag Chemie, Weinheim, 1980). Suitable additives are for example pleochroitic dyes for the preparation of colored guest-host-systems, or substances for changing the dielectric anisotropy, the viscosity and/or the orientation of the nematic phases, or stabilizers which prevent the oxidative influence of O₂ or destruction by radicals formed by light or otherwise.

Liquid crystal mixtures which contain one or more tetrahydropyran derivatives of formula I and very particularly liquid crystal mixtures additionally comprising components or component mixtures as mentioned above have advantageous properties and correspond to the requirements described at the beginning. The tetrahydropyran derivatives of formula I show a high dielectric anisotropy (Δε) and a balanced property profile of the rotational viscosity dielectric anisotropy and holding ratio. That compounds are very useful for the preparation of liquid crystal mixtures which are employed in order to achieve low threshold voltages. Δn of the liquid crystal mixtures can be influenced by the proper selection of the components, as Δn is mainly governed by the *π*-etectrons present in the structural ring elements, linkage elements, and endgroup elements.

A liquid crystal display device constituted by the use of the liquid crystal compositions and an electro-optical display device constituted by the use of the liquid crystal composition are proposed. These devices might be TN-cells (Schadt-Helfrich) or active proposed matrix TFT-displays with high resolution.

The following examples are intended to illustrate the invention without limiting.

The symbols have the following meaning:
K: crystalline solid state,
S: smectic phase (the index characterizes the phase type),
N: nematic phase,
I: isotrop phase.

The number between two symbols gives the transition temperature in degrees Celsius.

The percentage data given are percentages by weight.

### Examples

### Example 1

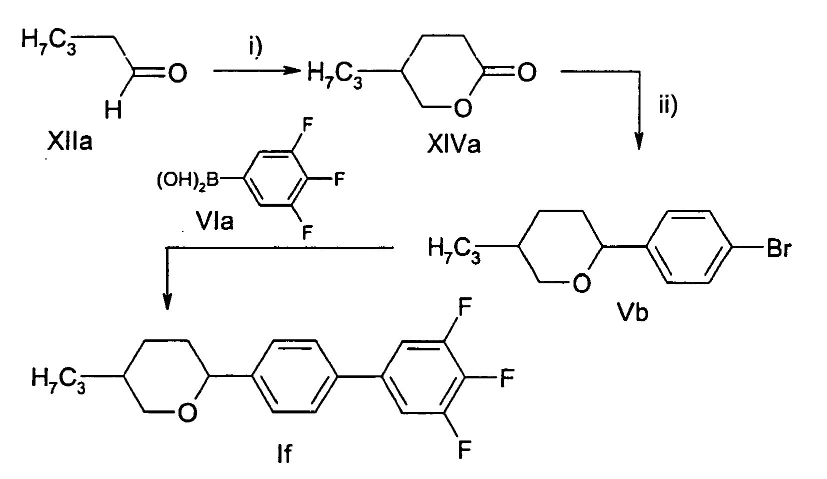

Synthesis of tetrahydropyran derivatives of formula I
i) The preparation of the lacton XIVa from the aldehyde XIIa is performed analogously to the literature ((a) R. Baker, A. L. Boyes, C. J. Swain, J. Chem. Soc. Perkin Trans. 1, 1990, 1415 1421; b) H. Hagiwava, T. Okabe, H. Ono, V. P. Kamat, T. Hoshi, T. Suzuki, M. Ando, J. Chem. Soc. Perkin Trans. 1, 2002, 895 - 990) and is obtained as woodruff scenting liquid in 35 % yield.
ii) To a solution of 207 mmol of 1,4-dibromobenzene in 250 ml diethylether is added at -50 °C drop by drop a solution of 207 mmol butyllithium (15 % in hexane). Then a solution of 170 mmol of XIVa is added dropwise at - 50 °C under stirring to the solution comprising the lithiated bromobenzene. After stirring for additional 30 minutes the temperature is increased to 0 °C and the intermediate 2-(4-Bromophenyl)-2-hydroxy-5-propyltetrahydropyran is worked up as usual by quenching with cold NH₄Cl-solution and isolating the raw material by evaporation of the dried organic phase.
   The raw material (51 g) is dissolved in 400 ml dichloromethane and at - 75 °C 400 ml triethylsilane are added. Then 400 mmol of boron trifluoride etherate are added dropwise to this solution keeping the temperature at -70 °C. Then the temperature is allowed to increase to 10 °C and the mixture is hydrolyzed with saturated NaHCO₃-solution and worked up as usual. The isolated raw material of Vb is a 9 : 1 mixture of the corresponding trans/cis isomers. After crystallization from pentane 30.6 g of trans Vb are obtained (61 %).
i) To 0,1 mol of Vb, 0.15 mol of K₃PO₄ in 200 ml of a 4 : 1 mixture of tetrahyrofuran/water are added at 80 °C 0.1 mol of 3,4,5.trifluoroboronic acid (prepared in the usual way from the Grignard-compound and trimethylborate) and 2 mol % of PdCl₂-2P(Ph)₃ under stirring. After continous heating and stirring for six hours the reaction mixture is worked up as usual by isolating and evaporating the organic phase. After filtrating the isolated raw material in an heptane/toluene solution over silica, the filtrate is evaporated to dryness and the residue is crystallized from heptane delivering the corresponding If as white crystals (yield 72 %).
   Similarly to If are prepared under variation of the corresponding groups A¹, A², A³, m, n, p, x, y, Q the compounds 1b, c, d, e, g, I, j, k, l, m, n, q, r, s, t, as disclosed in table 1.

### Example 2

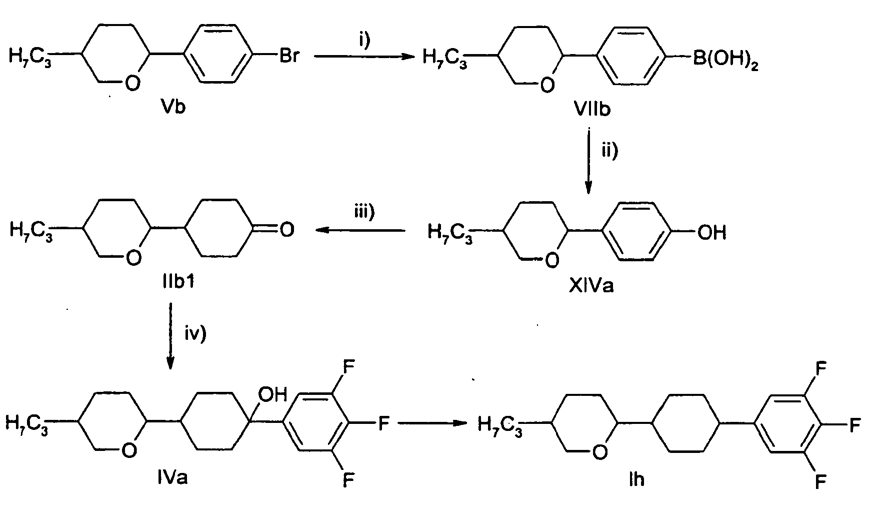

i) To 73 mmol of Vb, prepared according to example 1, in 200 ml tetrahydrofuran cooled to -70°C are added dropwise 73 mmol butyllithium (15 % in hexane) followed of 73 mmol trimethylborate in 50 ml of tetrahydrofuran. The reaction mixture is warmed up to 0 °C and then mixed with 2n HCL to pH 2. The raw material isolated from the organic phase is treated with hot heptane to extract unpolar impurities. The resulting crystals Vllb (72 %) are used in the next step.
ii) A mixture of 60 mmol of Vllb, 300ml of toluene, 120 mmol NaOH, 50 ml of water and 30 ml of H₂O₂ is stirred for two hours at 45 °C. Then, after cooling to room temperature the mixture is acidified with 10 % HCl to pH 2 and worked up by isolating the organic phase which yields after evaporation and recrystallisation from heptane XIVa (52 %).
iii) 32 mmol XIVa are hydrogenated in 100 ml xylene in the presence of 2,0 g wet 5 % Pd/C-catalyst at 5 bar and 130 °C for 28 hours. After usual work up IIb1 is obtained as colourless oil (65 %).
iv,v) 21 mmol of IIb1 in 25 ml of tetrahydrofuran are added to a Grignard solution prepared from 25 mmol of magnesium under stirring at room temperature. After one hour of additional heating to reflux the resulting hydroxyl compound IVa is isolated and reduced to Ih as described in example 1 for the reduction to Vb.
Similarly to lh are prepared under variation of the corresponding structural elements la, lo, lp (as disclosed in table 1).
In table 1 the tetrahydropyran derivatives prepared and their properties are disclosed.

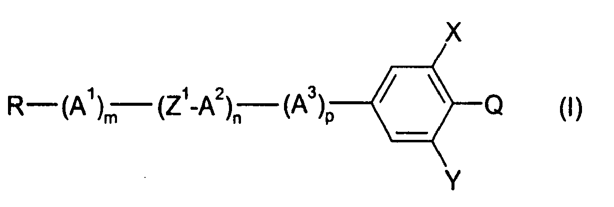

| | **R** | **m** | **n** | **p** | **Z¹** | **A¹** | **A²** | **A³** | **X** | **Y** | **Q** | **Δε** | **ε⊥** | **Δn** | **n₀** | |
|---|---|---|---|---|---|---|---|---|---|---|---|---|---|---|---|---|
| a | C₂H₅ | 0 | 1 | 1 | single bond | - | thp | cyc | F | F | F | 14,0 | 6,2 | 0.0475 | 1.4832 | K 72 I |
| b | C₃H₇ | 0 | 1 | 1 | single bond | - | cyc | thp | F | F | F | 12,2 | 5,7 | 0,0710 | 1,4752 | K 57 N (50,9) I |
| c | C₂H₅ | 0 | 1 | 1 | single bond | - | thp | phe | F | F | F | 14,5 | 7,1 | 0,1159 | 1,5031 | K 52 I |
| d | C₃H₇ | 0 | 1 | 1 | single bond | - | cyc | thp | F | F | OCF₃ | 13,5 | 5,6 | 0,0770 | 1,4522 | K 69 N 69,9 I |
| e | C₃H₇ | 1 | 1 | 1 | single bond | cyc | cyc | thp | F | F | F | 11,8 | 4,4 | 0,1020 | 1,4832 | K 113 N 255,9 I |
| f | C₃H₇ | 0 | 1 | 1 | single bond | - | thp | phe | F | F | F | 14,8 | 5,8 | 0,1243 | 1,5015 | K 41 I |
| g | C₃H₇ | 0 | 1 | 1 | single bond | - | thp | phe | F | F | OCF₃ | 18,0 | 5,7 | 0,1256 | 1,4753 | K 58 SmA (37) N 61 I |
| h | C₃H₇ | 0 | 1 | 1 | single bond | - | thp | cyc | F | F | F | 14,1 1 | 5,7 | 0,0599 | 1,4822 | K 71 I |
| i | C₃H₇ | 0 | 1 | 1 | single bond | - | thp | phe | F | H | F | 9,6 | 5,4 | 0,1430 | 1,5122 | K 50 SmA-1 (32) SmA-2 64 N 98.6 I |
| j | C₃H₇ | 0 | 1 | 1 | single bond | - | thp | phe | F | H | OCF₃ | 12,7 | 5,5 | 0,1380 | 1,4822 | K 45 SmA-1 68 SmA-2 118 I |
| k | C₃H₇ | 1 | 1 | 1 | single bond | thp | phe | phe-F | F | F | F | 20,9 | 5,3 | 0,2243 | 1,5103 | K 76 SmA 132 N 207 I |

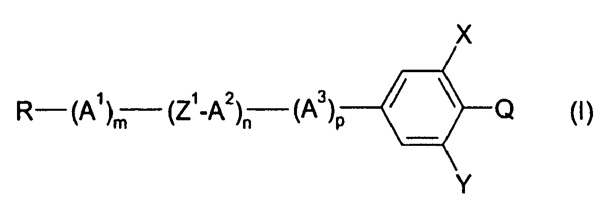

| | **R** | **m** | **n** | **p** | **Z¹** | **A¹** | **A²** | **A³** | **X** | **Y** | **Q** | **Δε** | **ε⊥** | **Δn** | **n₀** | |
|---|---|---|---|---|---|---|---|---|---|---|---|---|---|---|---|---|
| l | C₂H₅ | 0 | 1 | 1 | single bond | - | thp | phe | H | H | OCF₃ | 10,1 | 4,4 | 0,1422 | 1,4893 | K 54 Sm ? 87 SmB 154 SmA 168 I |
| m | C₃H₇ | 0 | 1 | 1 | single bond | - | thp | phe-F | F | F | F | 17,3 | 7,5 | 0,1071 | 1,4953 | K 64 I |
| n | C₃H₇ | 0 | 1 | 1 | single bond | - | thp | phe-F | F | H | F | 12,7 | 7,3 | 0,1254 | 1,4975 | K 43 N 43,7 I |
| o | C₃H₇ | 0 | 1 | 0 | single bond | - | thp | - | F | F | CN | 35,6 | 15,1 | 0,0580 | 1,4842 | K 27 I |
| p | C₃H₇ | 1 | 1 | 1 | single bond | thp | cyc | phe-F | F | F | F | 19,7 | 5,3 | 0,1384 | 1,4930 | K 74 N 197,6 I |
| q | C₂H₅ | 0 | 1 | 1 | single bond | - | thp | phe-F | F | H | F | 12,3 | 7,8 | 0,1167 | 1,5028 | K 28 N (10,6) I |
| r | C₂H₅ | 0 | 1 | 1 | single bond | - | thp | phe-F | F | H | OCF₃ | 15,2 | 7,6 | 0,1100 | 1,4762 | K37 SmA (35) N 38,81 |
| s | C₂H₅ | 0 | 1 | 1 | single bond | - | thp | phe-F | F | F | F | 17,8 | 8,3 | 0,0920 | 1,5003 | K 681 |
| t | C₂H₅ | 0 | 1 | 1 | single bond | - | cyc | thp | H | H | OCF₃ | 8,5 | 4,4 | 0,0810 | 1,4662 | K 37 SmB 93 N 105,51 |

| | | | | | | | | | | | | | | | | |
|---|---|---|---|---|---|---|---|---|---|---|---|---|---|---|---|---|
| thp tetrahydropyran-2,5-diyl Δε dielectric anisotropy phe 1,4-phenylene ε⊥ dielectric constant (perpendicular) cyc trans-1,4-cyclohexylene Δn optical anisotropy phe-F 3-F substituted 1,4-phenylene n₀ ordinary refractive index | | | | | | | | | | | | | | | | |

## Claims

1. A process for preparing tetrahydropyran derivatives of formula I 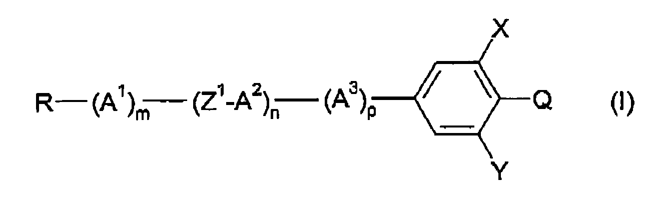 in which
R is H, an alkyl group, which is unsubstituted or substituted by at least one halogen atom or -CN, having from 1 to 12 C atoms, it is also being possible for one or more non adjacent CH₂-groups to be independently replaced by -O-, -S-, -CO-, -CF₂-, 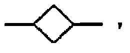 , -CO-O-, -O-CO-, or -CH=CH-, preferably unsubstitued alkyl group having from 1 to 12, preferably from 1 to 5, C atoms,
A¹, A², A³ are each independently
a) trans-1,4-cyclohexylene
b) tetrahydropyran-2,5-diyl,
c) 1,4-phenylene, it is also being possible for one or more non adjacent CH-groups to be replaced by N,
d) 1,4-bicyclo[2.2.2]octylene, piperidine-2,5-diyl,
e) naphthalene-2,6-diyl,
f) decahydronaphthalene-2,6-diyl,
g) 1,2,3,4-tetrahydronaphthalene-2,6-diyl,
h) 1,4-cyclohexenylene,
it is also being possible for the groups listed under c), e) and g) to be substituted with -CN, -Cl, -F or OCF₃,
with the proviso that one of the groups A¹, A², or A³ is tetrahydropyran-2,5-diyl,
Z is -CO-O-, -CH₂O-, -O-, -O-CH₂-, -CH₂CH₂-, -CH=CH-, -C≡C-, or a single bond,
m is 0, 1, or 2,
n and p each is independently 0, 1 or 2,
but (m+n+p) is at least 2 and at most 4,
X, Y each is -H or -F, with the proviso that at least one of X and Y is -F, and
Q is H, -CN, -NCS, -F, -Cl, -CF₃, -SF₅, -OCF₂CHFCF₃, -OCF₃, -OCHF₂, -OCHFCF₃, or -OCF₂CF₃,
comprising the step of coupling of two suitable fragments: 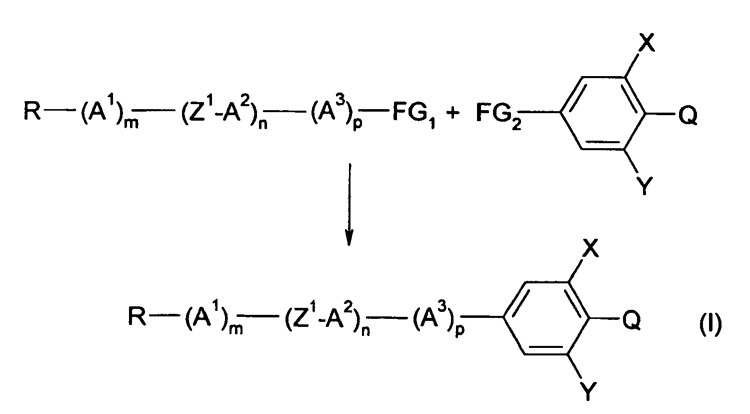 wherein FG₁ and FG₂ are functional groups, selected from:
| **-FG₁** | **-FG₂** |
|---|---|
| =O | -met = Li, MgBr, ZnBr, or 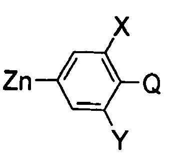 |
| -Br | -met = Li, MgBr, ZnBr, or Zn |
| -met = Li, MgBr, ZnBr, or Zn | -Br |
with the proviso, if Q in formula I is -CN or -NCS -met must be a Zn derivative.

2. A process according to claim 1 for the preparation of tetrahydropyran derivatives of formula 1, wherein m is 0 or 1 and n and p each is 0 or 1.

3. A process according to claims 1 or 2 for the preparation of tetrahydropyran derivatives of formula I, wherein at least one of A¹, A², and A³ is trans-1,4-cyclohexylene, tetrahydropyran-2,5-diyl, or one or two of A¹, A², and A³ are 1,4-phenylene, it is also being possible for one or more non adjacent CH-groups to be replaced by N or CF,
with the proviso that one of the groups A¹, A², or A³ is tetrahydropyran-2,5-diyl.

4. A process according to any of claims 1 to 3 for the preparation of tetrahydropyran derivatives of formula (lA) 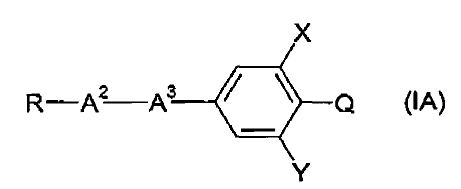 in which
R is H, an alkyl group, which is unsubstituted or substituted by at least one halogen atom or -CN, having from 1 to 12 C atoms, it is also being possible for one or more non adjacent CH₂-groups to be independently replaced by -O-, -S-, -CO-, -CF₂-, 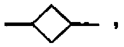 -CO-O-, -O- CO-, or -CH=CH-,
A², A³ are each independently
a) trans-1,4-cyclohexylene,
b) tetrahydropyran-2,5-diyl,
c) 1,4-phenylene, it is also being possible for one or more non adjacent CH-groups to be replaced by N, or CF,
X, Y each is -H or -F, with the proviso that at least one of X and Y is -F, and
Q is H, -CN, -NCS, -F, -Cl, -CF₃, -OCF₃, -OCHF₂, -OCHFCF₃, or -OCF₂CF₃,
with the proviso that one of the groups A² or A³ is tetrahydropyran-2,5-diyl.

5. A process according to any of claims 1 to 4 for the preparation of tetrahydropyran derivatives, wherein X, Y, and Q are -F.

6. A process according to any of claims 1 to 4 for the preparation of tetrahydropyran derivatives, wherein one of X and Y is -F and Q is -OCF₃.

7. A process according to any of claims 1 to 6 for the preparation of tetrahydropyran derivatives, wherein the first fragment of formula 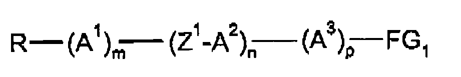
- (A^{a})ₚ-FG₁ is a group of formula

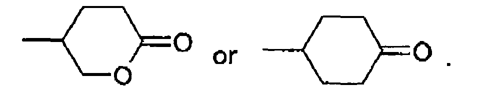

## Patentansprüche

1. Verfahren zur Herstellung von Tetrahydropyran-Derivaten der Formel I 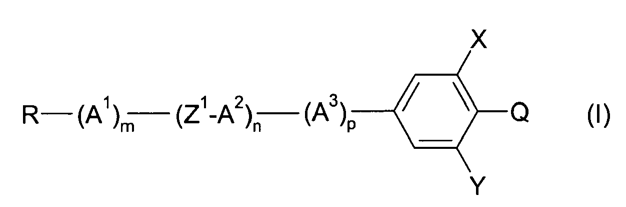 worin
R H, eine unsubstituierte oder mit mindestens einem Halogenatom oder -CN substituierte Alkylgruppe mit 1 bis 12 C-Atomen, wobei auch eine oder mehrere nicht-benachbarte CH₂-Gruppen unabhängig durch -O-, -S-, -CO-, -CF₂-, 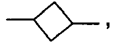 , CO-O-, -O-CO- oder -CH=CH- ersetzt sein können, vorzugsweise eine unsubstituierte Alkylgruppe mit 1 bis 12, vorzugsweise 1 bis 5 C-Atomen, bedeutet,
A¹, A², A³ jeweils unabhängig
a) trans-1,4-Cyclohexylen
b) Tetrahydropyran-2,5-diyl,
c) 1,4-Phenylen, wobei auch eine oder mehrere nicht-benachbarte CH-Gruppen durch N ersetzt sein können,
d) 1,4-Bicyclo[2.2.2]octylen, Piperidin-2,5-diyl,
e) Naphthalin-2,6-diyl,
f) Decahydronaphthalin-2,6-diyl,
g) 1,2,3,4-Tetrahydronaphthalin-2,6-diyl,
h) 1,4-Cyclohexenylen,
bedeuten,
wobei die unter c), e) und g) aufgelisteten Gruppen auch mit -CN, -Cl, -F oder OCF₃ substituiert sein können,
mit der Maßgabe, dass eine der Gruppen A¹, A² oder A³ Tetrahydropyran-2,5-diyl bedeutet,
Z -CO-O-, -CH₂O-, -O-, -O-CH₂-, -CH₂CH₂-, -CH=CH-, -C≡C- oder eine Einfachbindung bedeutet,
m 0, 1, oder 2 ist,
n und p jeweils unabhängig 0, 1 oder 2 sind,
aber (m+n+p) mindestens 2 und höchstens 4 beträgt,
X, Y jeweils -H oder -F bedeutet, mit der Maßgabe, dass mindestens eines von X und Y -F bedeutet,
Q H, -CN, -NCS, -F, -Cl, -CF₃, SF₅, -OCF₂CHFCF₃, -OCF₃, -OCHF₂, -OCHFCF₃ oder -OCF₂CF₃ bedeutet,
umfassend den Schritt des Kuppelns zweier geeigneter Fragmente: 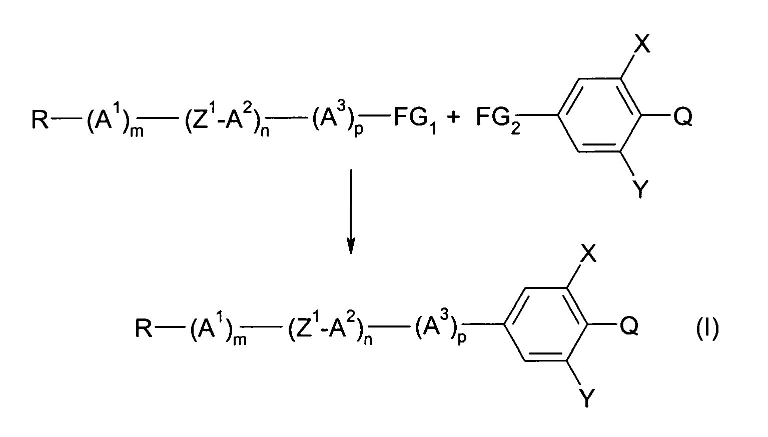 wobei FG₁ und FG₂ funktionelle Gruppen die aus:
| **-FG₁** | **-FG₂** |
|---|---|
| =O | -met = Li, MgBr, ZnBr oder 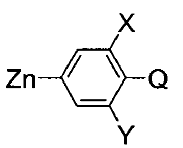 |
| -Br | -met = Li, MgBr, ZnBr oder Zn |
| -met = Li, MgBr, ZnBr oder Zn | -Br |
ausgewählt sind, bedeuten, mit der Maßgabe, dass wenn Q in Formel l -CN oder -NCS bedeutet, -met ein Zn-Derivat sein muss,.

2. Verfahren nach Anspruch 1 zur Herstellung von Tetrahydropyran-Derivaten nach Anspruch 1, wobei m 0 oder 1 ist und n und p jeweils 0 oder 1 sind.

3. Verfahren nach Anspruch 1 oder 2 zur Herstellung von Tetrahydropyran-Derivaten der Formel 1, wobei mindestens eines von A¹, A² und A³ trans-1,4-Cyclohexylen, Tetrahydropyran-2,5-diyl bedeutet oder eines oder zwei von A¹, A² und A³ 1,4-Phenylen bedeuten, wobei es ebenfalls möglich ist, dass eine oder mehrere nicht-benachbarte CH-Gruppen durch N oder CF ersetzt sind,
mit der Maßgabe, dass eine der Gruppen A¹, A² oder A³ Tetrahydropyran-2,5-diyl bedeutet.

4. Verfahren nach einen der Ansprüche 1 bis 3 zur Herstellung von Tetrahydropyran-Derivaten der Formel (IA) 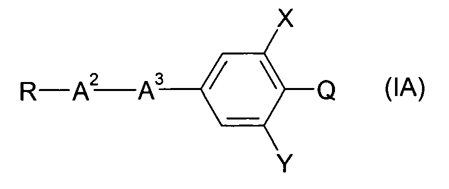 worin
R H, eine unsubstituierte oder mit mindestens einem Halogenatom oder -CN substituierte Alkylgruppe mit 1 bis 12 C-Atomen, wobei auch eine oder mehrere nicht-benachbarte CH₂-Gruppen unabhängig durch -O-, -S-, -CO-, -CF₂-, 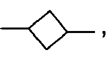 CO-O-, -O-CO- oder -CH=CH- ersetzt sein können, bedeutet,
A², A³ jeweils unabhängig
a) trans-1,4-Cyclohexylen
b) Tetrahydropyran-2,5-diyl,
c) 1,4-Phenylen, wobei auch eine oder mehrere nicht-benachbarte CH-Gruppen durch N oder CF ersetzt sein können,
bedeutet,
X, Y jeweils -H oder -F bedeutet, mit der Maßgabe, dass mindestens eines von X und Y -F bedeutet, und
Q H, -CN, -NCS, -F, -Cl, -CF₃, -OCF₃, -OCHF₂, -OCHFCF₃ oder -OCF₂CF₃ bedeutet,
mit der Maßgabe, dass eine der Gruppen A² oder A³ Tetrahydropyran-2,5-diyl bedeutet.

5. Verfahren nach einem der Ansprüche 1 bis 4 zur Herstellung von Tetrahydropyran-Derivaten, wobei X, Y und Q -F bedeuten.

6. Verfahren nach einem der Ansprüche 1 bis 4 zur Herstellung von Tetrahydropyran-Derivaten, wobei eines von X und Y -F und Q -OCF₃ bedeutet.

7. Verfahren nach einem der Ansprüche 1 bis 6 zur Herstellung von Tetrahydropyran-Derivaten, wobei das erste Fragment der Formel 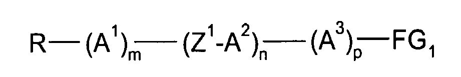
- (A ³)p-FG₁ eine Gruppe der Formel 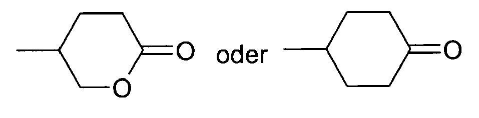
bedeutet.

## Revendications

1. Procédé pour la préparation de dérivés de tétrahydropyrane de la formule I 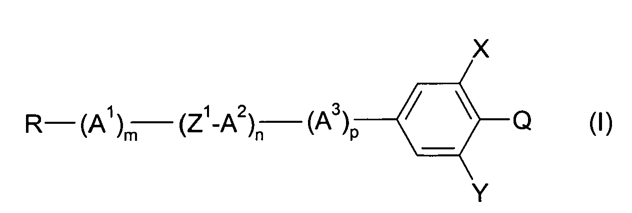 dans laquelle
R est H, un groupe alkyle, qui est non substitué ou substitué par au moins un atome d'halogène ou -CN, comportant de 1 à 12 atomes de C, étant entendu qu'il est également possible qu'un ou plusieurs groupes CH₂ non adjacents soient remplacés de manière indépendante par -O-, -S-, -CO-, -CF₂-, 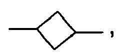 CO-O-, -O-CO-, ou -CH=CH-, de préférence un groupe alkyle non substitué comportant de 1 à 12 atomes de C, de préférence de 1 à 5 atomes de C,
A¹, A², A³ sont chacun de manière indépendante
a) trans-1,4-cyclohexylène
b) tétrahydropyrane-2,5-diyle,
c) 1,4-phénylène, étant également entendu qu'il est possible qu'un ou plusieurs groupes CH non adjacents soient remplacés par N,
d) 1,4-bicyclo[2.2.2]octylène, pipéridine-2,5-diyle,
e) naphthalène-2,6-diyle,
f) décahydronaphthalène-2,6-diyle,
g) 1,2,3,4-tétrahydronaphthalène-2,6-diyle,
h) 1,4-cyclohexénylène,
étant également entendu qu'il est possible que les groupes listés selon c), e) et g) soient substitués par -CN, -Cl, -F ou OCF₃,
étant entendu que l'un des groupes A¹, A² ou A³ est tétrahydropyrane-2,5-diyle,
Z est -CO-O-, -CH₂O-, -O-, -O-CH₂-, -CH₂CH₂-, -CH=CH-, -C≡C-, ou une liaison simple,
m est 0, 1, ou 2,
n et p sont chacun de manière indépendante 0, 1 ou 2,
mais (m+n+p) est au moins 2 et au plus 4,
X, Y sont chacun -H ou -F, étant entendu qu'au moins l'un de X et Y est -F, et
Q est H, -CN, -NCS, -F, -Cl, -CF₃, SF₅, -OCF₂CHFCF₃, -OCF₃, -OCHF₂, -OCHFCF₃, ou -OCF₂CF₃,
comprenant l'étape de couplage de deux fragments appropriés : 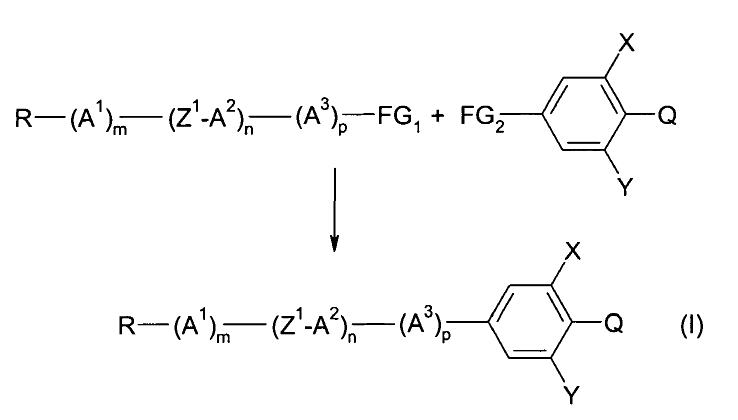 où FG₁ et FG₂ sont des groupes fonctionnels, choisis parmi :
| **-FG₁** | **-FG₂** |
|---|---|
| =O | -met = Li, MgBr, ZnBr, ou |
| | 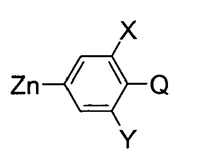 |
| -Br | -met = Li, MgBr, ZnBr, ou Zn |
| -met = Li, MgBr, ZnBr, ou Zn | -Br |
étant entendu que, si Q au niveau de la formule I est -CN ou -NCS, -met doit être un dérivé de Zn.

2. Procédé selon la revendication 1 pour la préparation de dérivés de tétrahydropyrane de la formule I, où m est 0 ou 1 et n et p sont chacun 0 ou 1.

3. Procédé selon la revendication 1 ou 2 pour la préparation de dérivés de tétrahydropyrane de la formule I, où au moins l'un de A¹, A² et A³ est trans-1,4-cyclohexylène, tétrahydropyrane-2,5-diyle, ou un ou deux de A¹, A² et A³ sont 1,4-phénylène, étant entendu qu'il est également possible qu'un ou plusieurs groupes CH non adjacents soient remplacés par N ou CF,
étant entendu que l'un des groupes A¹, A² ou A³ est tétrahydropyrane-2,5-diyle.

4. Procédé selon l'une quelconque des revendications 1 à 3 pour la préparation de dérivés de tétrahydropyrane de la formule (lA) 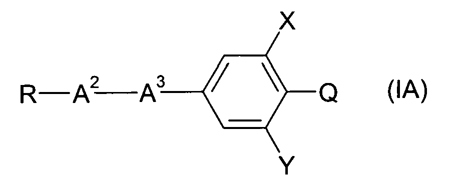 dans laquelle
R est H, un groupe alkyle, qui est non substitué ou substitué par au moins un atome d'halogène ou -CN, comportant de 1 à 12 atomes de C, étant entendu qu'il est également possible qu'un ou plusieurs groupes CH₂ non adjacents soient remplacés de manière indépendante par -O-, -S-, -CO-, -CF₂-, 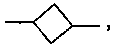 -CO-O-, -O-CO-, ou -CH=CH-,
A², A³ sont chacun de manière indépendante
a) trans-1,4-cyclohexylène,
b) tétrahydropyrane-2,5-diyle,
c) 1,4-phénylène, étant entendu qu'il est également possible qu'un ou plusieurs groupes CH non adjacents soient remplacés par N ou CF,
X, Y sont chacun -H ou -F, étant entendu qu'au moins l'un de X et Y est -F, et
Q est H, -CN, -NCS, -F, -Cl, -CF₃, -OCF₃, -OCHF₂, -OCHFCF₃, ou -OCF₂CF₃,
étant entendu que l'un des groupes A² ou A³ est tétrahydropyrane-2,5-diyle.

5. Procédé selon l'une quelconque des revendications 1 à 4 pour la préparation de dérivés de tétrahydropyrane, où X, Y, et Q sont -F.

6. Procédé selon l'une quelconque des revendications 1 à 4 pour la préparation de dérivés de tétrahydropyrane, où l'un de X et Y est -F et Q est -OCF₃.

7. Procédé selon l'une quelconque des revendications 1 à 6 pour la préparation de dérivés de tétrahydropyrane, où le premier fragment de la formule 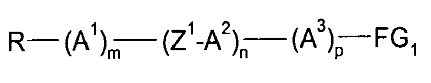
- (A³)ₚ-FG₁ est un groupe de la formule
